# EUROPÄISCHE PATENTSCHRIFT

(11) **EP 1 781 955 B1**
(45) Veröffentlichungstag und Bekanntmachung des Hinweises auf die Patenterteilung: **09.04.2008**
(21) Anmeldenummer: 05771805.8
(22) Anmeldetag: 25.06.2005
(51) Int. Cl.: F16B 21/18, F16D 3/38

(54) **LAGERANORDNUNG IN EINEM KREUZGELENK**
BEARING ARRANGEMENT IN A UNIVERSAL JOINT
SYSTEME DE PALIER DANS UN JOINT UNIVERSEL

(30) Priorität: 24.07.2004 DE 102004036105
(43) Veröffentlichungstag der Anmeldung: 09.05.2007
(73) Patentinhaber: Schaeffler KG, 91074 Herzogenaurach (DE)
(72) Erfinder: KRUPPA, Martin, 91074 Herzogenaurach (DE)
(86) Internationale Anmeldenummer: PCT/EP2005/006876
(87) Internationale Veröffentlichungsnummer: WO 2006/010420

(56) Entgegenhaltungen:
- BE-A- 469 209
- CH-A- 358 633
- DE-C- 710 596
- FR-A- 894 783
- GB-A- 1 230 078
- US-A- 5 352 079
- US-A- 5 797 800

## Beschreibung

### Gebiet der Erfindung

Die vorliegende Erfindung betrifft eine Lageranordnung in einem Kreuzgelenk zwischen zwei Wellenabschnitten, die unter einem Beugewinkel verdrehbar sind. Das Kreuzgelenk wird gebildet durch zwei an den Enden der Wellen angeordnete Gabeln, die über einen Kreuzzapfen verbunden sind. Dabei ist jeder Zapfen des Kreuzzapfens über eine Gelenkkreuzbüchse in einer zylindrischen Aufnahme der Gabel geführt, wobei ein in einer Ringnut der Aufnahme eingesetzter Sicherungsring eine axiale Sicherung der Gelenkkreuzbüchse gewährleistet und gleichzeitig deren Einbaulage definiert.

### Hintergrund der Erfindung

Ein Kreuzgelenk ist bestimmt um einen Antrieb zwischen einer ersten Welle unter einem Winkel zu einer zweiten Welle zu ermöglichen. Dabei umfasst das Kreuzgelenk einen Kreuzzapfen, von dem jeweils zwei gegenüberliegende Zapfen mittels Gelenkkreuzbüchsen in Aufnahmen einer Gabel eingepresst sind, unter Bildung einer Lageranordnung. Zur Erzielung einer reibungsarmen Lagerung sind die Zapfen des Kreuzzapfens über Nadellager in den Gelenkkreuzbüchsen wälzgelagert. Diese Konstruktion ermöglicht ein Verschwenken jeder Gabel gegenüber dem Zapfen des Kreuzzapfens um seine eigene Achse, während einer Drehmomentübertragung zwischen zwei unter einem Beugewinkel ausgerichtete, über das Kreuzgelenk verbundene Wellen. Für die Funktion und zur Erzielung einer hohen Lebensdauer des Kreuzgelenks ist insbesondere eine genaue Ausrichtung des Kreuzzapfens gegenüber der Drehachse entscheidend. Dadurch kann eine nachteilige Unwucht des Kreuzgelenks und damit des gesamten Antriebsstrangs vermieden werden.

Für die Einstellung von Kreuzgelenken ist ein Toleranzausgleich erforderlich, wobei die Summierung der Toleranzen von den Einzelteilen wie: Gabel, Breite der Ringnuten zur Aufnahme des Sicherungsrings, Bodendicke der Gelenkkreuzbüchse, Zapfenlänge des Kreuzzapfens und der Dicke des Sicherungsrings bestimmt wird. Um diese Toleranzen auszugleichen werden beispielsweise Sicherungsringe in verschiedenen Stärken zusortiert. Dieser aufwändige Prozess kompensiert dabei jedoch lediglich einen Ausgleich im Rahmen der Toleranz von der Bauteilstärke der Sicherungsringe.

Eine weitere Methode zum Toleranzausgleich sieht vor, bei einer Montage Material der Gabel im Bereich der Aufnahme so zu verformen, dass dieses am Büchsenboden anliegt und damit die Gelenkkreuzbüchse axial gesichert ist. Diese Maßnahme erfordert für eine Reparatur Spezialwerkzeuge, um beispielsweise den Austausch von Gelenkkreuzbüchsen vorzunehmen. Außerdem ermöglicht die Materialumformung lediglich eine begrenzte Haltekraft und damit für bestimmte Einsatzfälle eine nicht ausreichende Axialkraftsicherung.

Das Patent US 5,797,800 zeigt die Lageranordnung eines Kreuzgelenks, bei dem zur Sicherung der Gelenkkreuzbüchse und des Kreuzzapfens im Bereich der Ringnut Material der Gabel gegen den Sicherungsring verprägt wird. Die sich dabei einstellende Haltekraft ist aufgrund der lokalen, punktförmigen Abstützung des Sicherungsrings im Bereich der Verprägungen geringer als bei einem konventionellen Einbau des Sicherungsrings.

Gemäß dem Patent US 6,336,868 ist zum Spielausgleich des Sicherungsrings in dem Kreuzgelenk die Gabel mit partiell vorstehenden Butzen versehen, die nach dem einpressen der Gelenkkreuzbüchse in die dafür bestimmte Aufnahme verformt werden.

Dokumente US-A-5 352 079, GB-A-1 230 078, FR 894 783 A, CH 358 633 A, DE 710 596 C und BE 469 209 A beziehen sich jeweils auf einen eine schiefe Ebene bildenden Sicherungsring zum Einbau in Lageranordnungen eine Kreuzgelenkes.

Die bekannten Maßnahmen zum Spielausgleich bewirken eine geringere Haltekraft und damit eine nachteilig für viele Einbaufälle nicht ausreichende Axialkraftsicherung, insbesondere im Vergleich zu einer konventionellen herkömmlichen Sicherungsringmontagen.

### Zusammenfassung der Erfindung

Die Nachteile bekannter Lösungen berücksichtigend, ist es Aufgabe der vorliegenden Erfindung, in einer Kreuzgelenk-Lageranordnung einen Spielausgleich zu schaffen, der bei einer Beibehaltung der Haltekraft eine Montage sowie Demontage mit einfachen Mitteln ermöglicht.

Diese Aufgabenstellung wird durch die Merkmale des Anspruchs 1 gelöst. Danach umfasst die erfindungsgemäße Lageranordnung für ein Kreuzgelenk einen einstellbaren, d.h. verstellbaren bzw. verdrehbar angeordneten Sicherungsring, welcher in einer axialen Richtung eine schiefe helixförmige Ebene bildet. Dieser Sicherungsring ist im eingebauten Zustand über die schiefe Ebene direkt oder indirekt an dem Boden der Gelenkkreuzbüchse zugeordnet ist. In der Einbaulage stützt sich die schiefe Ebene des Sicherungsrings unmittelbar an einer weiteren korrespondierenden schiefen Ebene ab.

Diese erfindungsgemäße Maßnahme reduziert in vorteilhafter Weise eine Zusortierung von Sicherungsringen und damit die Anzahl der erforderlichen Sicherungsringgruppen, da auf eine Abstimmung verzichtet werden kann. Gleichzeitig erreicht die erfindungsgemäße Maßnahme eine Spielfreiheit des Kreuzgelenks, verbunden mit einer für die Funktion wichtigen Montagesymmetrie sowie ein definiertes niedriges Gelenkbeugemoment. Für die Erfindung ist eine Montagefolge vorgesehen, bei der zunächst die Gelenkkreuzbüchse in die Aufnahme der Gabeln eingepresst wird, bevor der Sicherungsring in die dazu vorbestimmten Ringnut eingesetzt wird und dabei mit einem weitern Bauteils über die zueinander korrespondierenden schiefen Ebenen zusammenwirkt. Nachdem der Sicherungsring in die Ringnut der Gabel eingesetzt ist, lassen sich durch Drehen des Sicherungsrings unterschiedliche Abstandsmaß ermitteln. Beispielsweise zwischen der Außenkontur des Sicherungsrings oder des Bodens der Gelenkkreuzbüchse und der Außenkontur der Gabel im Bereich der Aufnahme, um so eine Mittenzentrierung bzw. eine Einstellung der Gelenksymmetrie und des Gelenkbeugemomentes zu ermöglichen.

Diese Maßnahme verbessert die Laufruhe der Gelenkwelle und verringert entscheidend den Aufwand für das Wuchten der Welle. Im Idealfall kann dabei sogar nach der Montage des Kreuzgelenks das Wuchten völlig entfallen. Für die Reparatur der Gelenkwelle, der Demontage des Kreuzgelenks, wird der radial vorgespannte, als Sprengring ausgebildete Sicherungsring beispielsweise mittels einer Zange aus der Ringnut entfernt. Anschließend ist die Gelenkkreuzbüchse ohne jegliche Umformarbeit aus der Aufnahme der Gabel demontierbar. Vorteilhaft bietet es sich an, ein der vorliegenden Erfindung entsprechendes Reparaturset so auszulegen, um einen Austausch einer konventionellen Sicherungshalterung zu ermöglichen.

Die spielfreie Einstellung der Gelenkkreuzbüchse in der Aufnahme der Gabel wird mittels des erfindungsgemäßen Sprengrings so gestaltet, dass dieser in einer axialen Richtung eine schiefe Ebene in Form einer Schraubenlinienform bildet, die auch als helixförmig zu bezeichnen ist. Hierdurch entsteht zwischen dem Anfangspunkt und dem Endpunkt des geschlitzt gestalteten, eine Trennfuge bildenden Sicherungsrings ein Differenzmaß. Die dazugehörige Kontaktfläche, mit dem der Sicherungsring zusammenwirkt weist eine dem Sicherungsring entsprechend helixförmig gestaltete korrespondierende schiefe Ebene auf. Durch ein Verdrehen des Sicherungsrings in eine Richtung, bei der die schiefen Ebenen des Sicherungsrings und der zugehörigen Kontaktfläche sich addieren, ist ein wirksamer Spielausgleich erzielbar.

Vorteilhafte Ausgestaltungen der Erfindung sind Gegenstand der abhängigen Ansprüche 2 bis 8.

Eine vorteilhafte Ausgestaltung der Lageranordnung sieht vor, dass die Gelenkkreuzbüchse an dem Boden, d.h. stirnseitig in axialer Richtung zeigend eine helixförmig bzw. eine schraubenlinienförmig ansteigend ausgebildete Kontaktfläche aufweist. Im eingebauten Zustand der Gelenkkreuzbüchse steht die diese Kontaktfläche mit der korrespondierenden, ebenfalls helixförmig gestalteten Fläche des Sicherungsrings in einer Wirkverbindung.

Alternativ dazu bietet es sich gemäß der Erfindung an, einen Zwischenring anzuordnen, der im eingebauten Zustand zwischen der Gelenkkreuzbüchse und dem Sicherungsring eingesetzt ist. Die helixförmig bzw. schraubenlinienförmig verlaufende Kontaktzone wird dabei von den Kontaktbereichen des Sicherungsrings und des Zwischenrings gebildet. Zur Vermeidung einer Fehlmontage bietet es sich an, den Zwischenring übereinstimmend mit dem Sicherungsring zu gestalten. Dieser Aufbau erfordert keinen lageorientierten Einbau, wodurch gleichzeitig eine Fehlmontage ausgeschlossen ist.

Bevorzugt ist als Sicherungsring bzw. als Zwischenring ein radial vorgespannter, eine Trennfuge bildender Sprengring eingesetzt. Aufgrund der helixförmig gestalteten Kontaktfläche und dem Zusammenwirken mit einem Bauteil dass eine korrespondierende Kontaktfläche aufweist, wird im eingebauten Zustand ein sowohl ein radiales Spiel vermieden als auch ein wirksamer axialer Spielausgleich sicherstellt.

In vorteilhafter Weise ist der erfindungsgemäße Sicherungsring weiterhin mit Maßnahmen versehen, die eine Montage und Demontage vereinfachen, d. h. insbesondere eine vereinfachte Verdrehung ermöglichen. Bevorzugt ist dazu der Sicherungsring und / oder der Zwischenring mit Bohrungen versehen, in die mittels eines Spezialwerkzeugs, beispielsweise ein Hakenschlüssels der Sicherungsring verdrehbar bzw. einstellbar ist. Alternativ oder ergänzend schließt die Erfindung Noppen oder Butzen ein, die an dem Sicherungsring angeformt, für eine Werkzeugaufnahme bestimmt sind.

Die Erfindung schließt weiterhin eine Fixierung bzw. eine Sicherung ein, die den Sicherungsring in der Endlage fixiert. Dazu eignet sich insbesondere eine Verprägung, d. h. eine Werkstoffumformung der Gabel im Bereich der Trennfuge des Sicherungs und / oder des Zwischenrings, wodurch ein selbsttätiges Lösen unterbunden ist. Ergänzend oder alternativ eignet sich zur Sicherung bzw. Fixierung des Sicherungsrings und / oder des Zwischenrings eine Verklebung zwischen dem Gabelschenkel und dem Sicherungsring im Bereich der Ringnut.

### Kurze Beschreibung der Zeichnungen

Ausführungsbeispiele der Erfindung sind in den Figuren dargestellt. Es zeigen:
- Figur 1: eine erfindungsgemäße Gelenkkreuzbüchse eines Kreuzgelenks, an deren Boden ein Sicherungsring über eine schiefe Ebene abgestützt ist;
- Figur 2: einen Ausschnitt eines Kreuzgelenks, bei dem zwischen dem Sicherungsring und dem Boden der Gelenkkreuzbüchse ein Zwischenring eingesetzt ist;
- Figur 3: in einer Explosionszeichnung den Aufbau eines bekannten Kreuzgelenks.

### Detaillierte Beschreibung der Zeichnungen

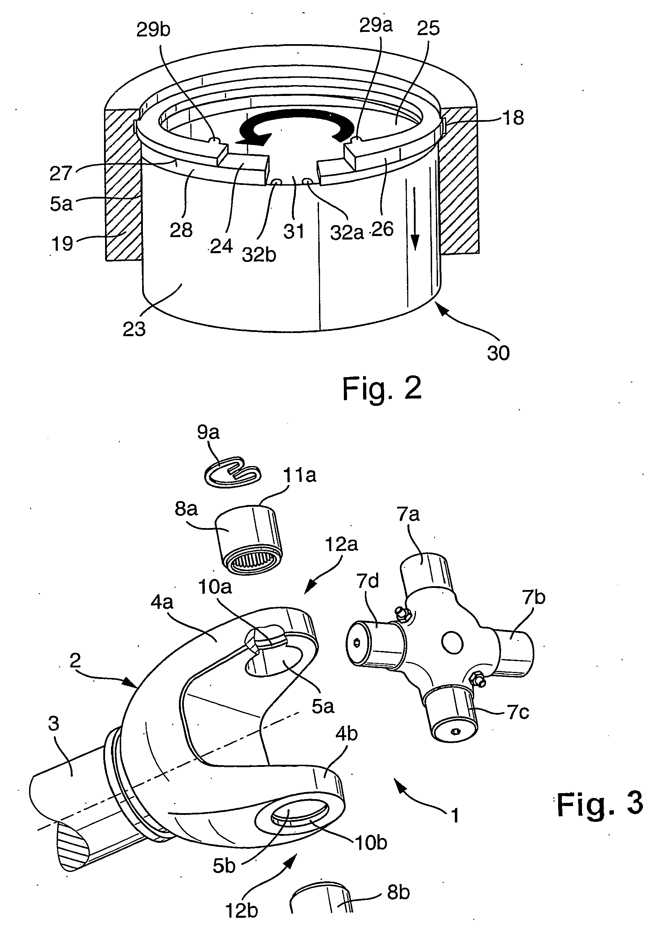

Zur Erläuterung der Erfindung wird zunächst Bezug genommen auf die Figur 3, die in einer Explosionszeichnung alle Einzelteile eines bekannten Kreuzgelenks und damit gleichzeitig den Aufbau einer Lageranordnung in einem Kreuzgelenk verdeutlicht. Das Kreuzgelenk 1 umfasst eine Gabel 2, die endseitig an einer Welle 3 drehstarr befestigt ist. Dabei bildet die Gabel 2 zwei axial versetzte Gabelschenkel 4a, 4b, die jeweils eine als Bohrung gestaltete Aufnahme 5a, 5b aufweisen. Ein Kreuzzapfen 6, der vier jeweils um 90° zueinander versetzt angeordnete Zapfen 7a bis 7d umfasst ist im eingebauten Zustand über die Zapfen 7a und 7c in den Aufnahmen 5a, 5b der Gabelschenkel 4a, 4b eingesetzt. Dabei sind die Zapfen 7a, 7c in der Gelenkkreuzbüchse 8a, 8b über als Nadeln ausgebildete Wälzkörper wälzgelagert geführt. Zur Axialsicherung der Gelenkkreuzbüchsen 8a, 8b sind Sicherungsringe 9a, 9b vorgesehen, welche radial vorgespannt kraftschlüssig in eine Ringnut 10a, 10b der Aufnahme 5a, 5b eingepasst sind. In der Einbaulage stützen sich die Gelenkkreuzbüchsen 8a, 8b jeweils über den Boden 11a, 11b an den Sicherungsringen 9a, 9b ab, die folglich einen Axialanschlag bilden. Der Kreuzzapfen 6 ist folglich über zwei Lageranordnungen 12a, 12b, gebildet durch die Gelenkkreuzbüchsen 8a, 8b in Verbindung mit den Zapfen 7a, 7c in der Gabel 2 wälzgelagert. Über zwei weitere Lageranordnungen, von denen die Zapfen 7b, 7d in Figur 3 dargestellt sind ist das Kreuzgelenk 1 mit einer zugehörigen weiteren Gabel und Welle verbunden, die eine Drehmomentübertragung von zwei unter einem Beugewinkel angeordneten Wellen ermöglichen.

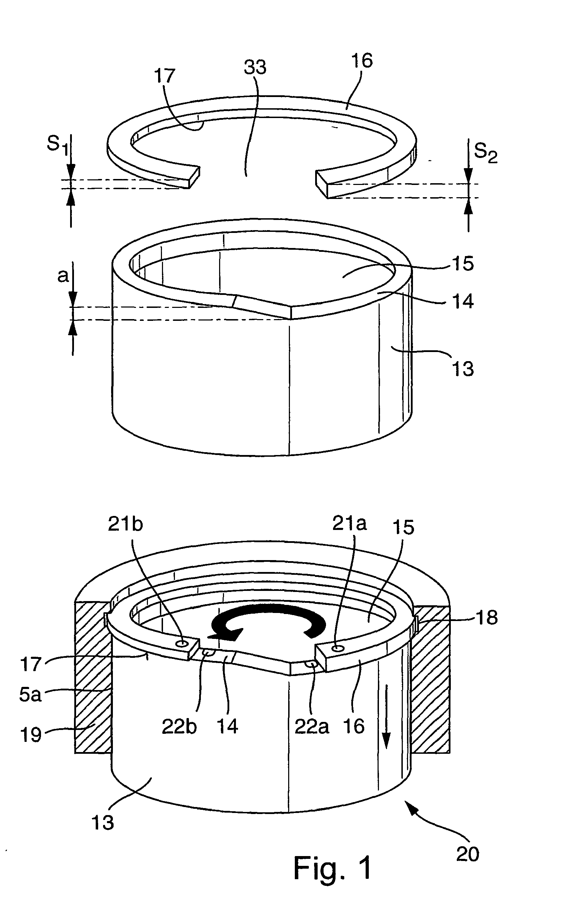

Die Lebensdauer des Kreuzgelenks 1, wird unmittelbar durch die Qualität der Einbaulage, das Einbauspiel des Kreuzzapfens 6 gegenüber der Gabel 2 beeinflusst. Zur Einstellung des Einbauspiels ist gemäß Figur 1 die Gelenkkreuzbüchse 13 stirnseitig mit einer in axialer Richtung ansteigend ausgebildeten Kontaktfläche 14 versehen. Die außenseitig die Stirnseite des Bodens 15 umschließende, helixförmig ansteigend gestaltete Kontaktfläche 15 bildet ein Differenzmaß "a" zwischen dem Anfang und dem Ende der sich nahezu über 360° erstreckenden Kontaktfläche 14. Dem Verlauf der Kontaktfläche 14 entsprechend ist der Sicherungsring 16 gestaltet, deren Dicke sich von einem Kleinstmaß "s₁" auf ein Größtmaß "s₂" vergrößert. In der Einbaulage stützt sich der Sicherungsring 16 mit der ebenfalls helixförmig ansteigenden Kontaktfläche 17 an der zugehörigen Kontaktfläche 14 der Gelenkkreuzbüchse 13 ab.

In der unteren Abbildung von Figur 1 ist die erfindungsgemäß gestaltete Gelenkkreuzbüchse 13 in der Einbaulage, d.h. in die Aufnahme 5a der Gelenkgabel 19 eingepresst dargestellt. Der radial vorgespannte, eine Trennfuge 33 aufweisende Sicherungsring 16 ist dabei radial vorgespannt, formschlüssig in eine Ringnut 18 der Gelenkgabel 19 eingesetzt. Über die jeweils entgegengesetzt helixförmig verlaufenden Kontaktflächen 14, 17 ist der Sicherungsring 16 an dem Boden 15 der Gelenkkreuzbüchse 13 abgestützt. Ein Verdrehen im Uhrzeigersinn des Sicherungsrings 16 bewirkt eine Verschiebung der Gelenkkreuzbüchse 13 in Pfeilrichtung gegenüber der Gelenkgabel 19. Der Sicherungsring 16 wird soweit in eine Richtung verdreht, bis ein Spielausgleich und die erforderliche axiale Vorspannung und ein definiertes Gelenkbeugemoment erreicht ist. Zur Erzielung einer optimalen Gelenksymmetrie bietet es sich an, die Gelenkkreuzbüchsen 13 beim Einpressen zu der Gelenkachse, d.h. der Drehachse des Kreuzgelenks 1 zentrisch auszurichten, bevor über die verdrehbaren Sicherungsringe 16 das Einbauspiel beidseitig der Gelenkgabel 19 individuell ausgeglichen ist.

Die erfindungsgemäße Lageranordnung 20 gemäß Figur 1 ermöglicht eine spielfreie Anordnung der Gelenkkreuzbüchse 13 gegenüber dem Kreuzzapfen 6 des Kreuzgelenks 1. Gleichzeitig kann eine genaue Einstellung bzw. Justierung des Kreuzzapfens 6 erreicht werden, zur Erzielung eines ausgewuchteten und damit schwingungsfreien Laufs der Gelenkwelle bzw. den mit dem Kreuzgelenk 1 in Verbindung stehenden Wellen. Der Sicherungsring 16 ist jeweils endseitig im Bereich der Trennfuge 33 mit Bohrungen 21a, 21b versehen, in die beispielsweise ein Werkzeug einsetzbar ist, um den Sicherungsring 16 zu verdrehen. Zur Lagefixierung des Sicherungsrings 16 gegenüber der Gelenkkreuzbüchse 13 sind an dem Boden 15 im Bereich der Kontaktfläche 14 Noppen 22a, 22b angeformt, die eine wirksame Verdrehsicherung des Sicherungsrings 16 darstellen. Andererseits sind die Noppen 22a, 22b bei einer erforderlichen Demontage der Lageranordnung 20 leicht entfernbar, um eine Demontage der Lageranordnung 20 zu ermöglichen, bei der zunächst der Sicherungsring 16 im Uhrzeigersinn verdreht wird.

Die Figur 3 zeigt die Lageranordnung 30, bei der zum Spielausgleich der Sicherungsring 26 über einen Zwischenring 28 mit der Gelenkkreuzbüchse 23 in einer Wirkverbindung steht. Dabei sind der Sicherungsring 26 und der Zwischenring 28 über entgegengesetzt zueinander helixförmig gestaltete Kontaktflächen 24 und 27 abgestützt. Der Zwischenring 28 ist dabei an dem glattflächigen, eben gestalteten Boden 25 der Gelenkkreuzbüchse 23 abgestüt. Dabei weist der Zwischenring 28 übereinstimmend mit dem Sicherungsring 26 eine Trennfuge 31 auf und ist radial vorgespannt in die Ringnut 18 der Gelenkgabel 18 eingesetzt. Zur Lagefixierung des Zwischenrings 28 bietet es sich an, in den Boden 25 zwei in die Trennfuge 31 ragende Noppen 32a, 32b anzuformen. Zur Spieleinstellung der Lageranordnung 30 wird der Sicherungsring 26 im Gegenuhrzeigersinn verdreht, wodurch sich die Gelenkkreuzbüchse 23 in Pfeilrichtung verschiebt. Eine vereinfachte Verdrehung des Sicherungsrings 26 ist mittels eines in Figur 2 nicht abgebildetes Werkzeugs erreichbar, dass mit zwei beabstandet angeordneten Butzen 29a, 29b des Sicherungsrings 26 zusammenwirkt.

### Bezugszahlen

- 1: Kreuzgelenk
- 2: Gabel
- 3: Welle
- 4a: Gabelschenkel
- 4b: Gabelschenkel
- 5a: Aufnahme
- 5b: Aufnahme
- 6: Kreuzzapfen
- 7a: Zapfen
- 7b: Zapfen
- 7c: Zapfen
- 7d: Zapfen
- 8a: Gelenkkreuzbüchse
- 8b: Gelenkkreuzbüchse
- 9a: Sicherungsring
- 9b: Sicherungsring
- 10a: Ringnut
- 10b: Ringnut
- 11a: Boden
- 11b: Boden
- 12a: Lageranordnung
- 12b: Lageranordnung
- 13: Gelenkkreuzbüchse
- 14: Kontaktfläche
- 15: Boden
- 16: Sicherungsring
- 17: Kontaktfläche
- 18: Ringnut
- 19: Gelenkgabel
- 20: Lageranordnung
- 21a: Bohrung
- 21b: Bohrung
- 22a: Noppen
- 22b: Noppen
- 23: Gelenkkreuzbüchse
- 24: Kontaktfläche
- 25: Boden
- 26: Sicherungsring
- 27: Kontaktfläche
- 28: Zwischenring
- 29a: Butzen
- 29b: Butzen
- 30: Lageranordnung
- 31: Trennfuge
- 32a: Noppen
- 32b: Noppen
- 33: Trennfuge

## Patentansprüche

1. Lageranordnung eines Kreuzgelenks, das zwei an ihren Enden Gabeln (2) aufweisende Wellen (3) umfasst, die über einen Kreuzzapfen (6) verbunden sind, wobei jeder Zapfen (7a bis 7d) des Kreuzzapfens (6) über eine Gelenkkreuzbüchse (8a, 8b; 13; 23) in einer zylindrischen Aufnahme (5a, 5b) der Gabel (2) geführt ist und ein in einer Ringnut (10a, 10b; 18) der Aufnahme (5a, 5b) eingesetzter, radial vorgespannter, Sicherungsring (9a, 9b; 16; 26) eine Einbaulage der Gelenkkreuzbüchse (8a, 8b; 13; 23) definiert, und wobei *der Sicherungsring (16, 26) geschlitzt ist,* **dadurch gekennzeichnet, dass** *der Sicherungsring (16, 26) in eine axiale Richtung eine schiefe Ebene bildet und dass die schiefe Ebene helixförmig ausgebildet ist, wobei* der verdreh-einstellbare Sicherungsring (16, 26) direkt oder indirekt an einem Boden (15, 25) der Gelenkkreuzbüchse (13, 23) über eine weitere korrespondierende schiefe Ebene abgestützt ist.

2. Lageranordnung nach Anspruch 1, bei der die Gelenkkreuzbüchse (13) an dem Boden (15) in axialer Richtung eine helixförmig ansteigend ausgebildete, für den Sicherungsring (16) bestimmte Kontaktfläche (14) aufweist ist.

3. Lageranordnung nach Anspruch 1, bei dem der Sicherungsring (26) über einen Zwischenring (28) indirekt an der Gelenkkreuzbüchse (23) abgestützt ist, wobei zugewandte Kontaktflächen (24, 27) des Sicherungsrings (26) und des Zwischenrings (28) übereinstimmend helixförmig ansteigend ausgebildet sind.

4. Lageranordnung nach Anspruch 1, bei dem als Sicherungsring (16, 26) ein radial vorgespannter, eine Trennfuge aufweisender eine Trennfuge (33) aufweisender Sprengring vorgesehen ist.

5. Lageranordnung nach Anspruch 1, wobei der Sicherungsring (16, 26) Maßnahmen einschließt, die eine vereinfachte Montage bzw. Demontage sowie eine Einstellung oder Verdrehung sicherstellen.

6. Lageranordnung nach Anspruch 5, wobei der Sicherungsring (16) Bohrungen (21a, 21b) aufweist, über die der Sicherungsring (16) in Verbindung eines Werkzeugs verdrehbar ist.

7. Lageranordnung nach Anspruch 5, bei dem der Sicherungsring (26) Butzen (29a, 29b) einschließt, die für ein Werkzeug zur Verdrehung des Sicherungsrings (26) bestimmt sind.

8. Lageranordnung nach Anspruch 1, bei der zur Drehfixierung des Sicherungsrings (16) und / oder des Zwischenrings (28) an dem Boden (15, 25) der Gelenkkreuzbüchse (13, 23) Noppen (32a, 32b) im Bereich einer Trennfuge (31, 33) angeformt sind.

## Claims

1. Bearing arrangement for a universal joint having two shafts (3) comprising forks (2) on their ends and being connected by a cardan spider (6), each journal (7a to 7d) of the cardan spider (6) being guided by means of a universal joint bushing (8a, 8b; 13; 23) in a cylindrical reception (5a, 5b) of the fork (2), a radially pre-stressed locking ring (9a, 9b; 16, 26) inserted into an annular groove (10a, 10b; 18) of the reception (5a, 5b) defining an installation position of the universal joint bushing (8a, 8b; 13; 23), and said locking ring (16, 26) being split, **characterised in that** the locking ring (16, 26) forms an inclined plane in one axial direction and that the inclined plane has a helix-shaped configuration, the locking ring (16, 26) which can be adjusted by twisting is supported directly or indirectly on a bottom (15, 25) of the universal joint bushing (13, 23) through a further corresponding inclined plane.

2. Bearing arrangement according to claim 1, wherein the universal joint bushing (13) comprises in axial direction on the bottom (15), a contact surface (14) for the locking ring (16), which contact surface (14) has a helix-shaped ascending configuration.

3. Bearing arrangement according to claim 1, wherein the locking ring (26) is supported through an intermediate ring (28) indirectly on the universal joint bushing (23), and facing contact surfaces (24, 27) of the locking ring (26) and the intermediate ring (28) have mating, ascending helix-shaped configurations.

4. Bearing arrangement according to claim 1, wherein the locking ring (16, 26) is a radially pre-stressed snap ring having a parting gap (33).

5. Bearing arrangement according to claim 1, wherein the locking ring (16, 26) includes measures that assure simplified mounting and dismounting as well as adjustment or twisting.

6. Bearing arrangement according to claim 5, wherein the locking ring (16) comprises bores (21a, 21b) by means of which, in conjunction with a tool, the locking ring (16) can be twisted.

7. Bearing arrangement according to claim 5, wherein the locking ring (26) includes rounded stubs (29a, 29b) that are destined for a tool for twisting the locking ring (26).

8. Bearing arrangement according to claim 1, wherein, for the rotational fixing of the locking ring (16) and / or the intermediate ring (28) on the bottom (15, 25) of the universal joint bushing (13, 23), knobs (32a, 32b) are integrally formed in the region of a parting gap (31, 33).

## Revendications

1. Agencement de palier d'un joint universel comprenant deux arbres (3) qui sont munis, sur leurs extrémités, de fourchettes (2) et sont reliés, l'un à l'autre, par un croisillon (6), chaque tourillon (7a à 7d) du croisillon (6) étant guidé par une douille (8a, 8b ; 13 ; 23) de joint universel dans une réception cylindrique (5a, 5b) de la fourchette (2), un circlip (9a, 9b ; 16 ; 26) qui est radialement précontraint et est inséré dans une rainure annulaire (10a, 10b ; 18) de la réception (5a, 5b) définissant une positon de montage de la douille (8a, 8b ; 13 ; 23) de joint universel, et ledit circlip (16, 26) étant fendu, **caractérisé en ce que** le circlip (16, 26) forme dans une des directions axiales, un plan incliné, et que ce plan incliné a une configuration en forme d'hélice, ledit circlip (16, 26) peut être ajusté par contournement et est supporté de manière directe ou indirecte sur un fond (15, 25) de la douille (13, 23) de joint universel par l'intermédiaire d'un autre plan incliné correspondant.

2. Agencement de palier selon la revendication 1, dans lequel la douille (13) de joint universel comprend sur le fond (15), en direction axiale, une surface de contact (14) avec le circlip (16), ladite surface de contact (14) ayant une configuration en forme d'hélice ascendante.

3. Agencement de palier selon la revendication 1, dans lequel le circlip (26) est supporté de manière indirecte sur la douille (23) de joint universel au moyen d'un anneau intermédiaire (28), et des surfaces de contact (24, 27) opposées du circlip (26) et de l'anneau intermédiaire (28) ont des configurations correspondantes en forme d'hélices ascendantes.

4. Agencement de palier selon la revendication 1, dans lequel le circlip (16, 26) est un jonc en segment qui est radialement précontraint et comprend un intervalle de séparation.

5. Agencement de palier selon la revendication 1, dans lequel le circlip (16, 26) inclut des mesures qui assurent un montage et démontage ainsi qu'un ajustement ou contournement simplifiés.

6. Agencement de palier selon la revendication 5, dans lequel le circlip (16) comprend des alésages (21a, 21b) par l'intermédiaire desquels le circlip (16) peut être contourné à l'aide d'un outil.

7. Agencement de palier selon la revendication 5, dans lequel le circlip (26) inclut des saillies arrondies (29a, 29b) qui sont destinées à un outil pour le contournement du circlip (26).

8. Agencement de palier selon la revendication 1, dans lequel, pour l'immobilisation en rotation du circlip (16) et / ou de l'anneau intermédiaire (28) sur le fond (15, 25) de la douille (13, 23) de joint universel, des boutons (32a, 32b) sont formés de manière intégrale dans la région d'un intervalle de séparation (31, 33).
